# EUROPÄISCHE PATENTANMELDUNG

(11) **EP 1 887 813 A1**
(43) Veröffentlichungstag der Anmeldung: **13.02.2008**
(21) Anmeldenummer: 06016582.6
(22) Anmeldetag: 08.08.2006
(51) Int. Cl.: H04Q 7/30

(54) **Verfahren und Anordnung zur Übertragung von digitalen Daten**

(71) Anmelder: Nokia Siemens Networks GmbH & Co. KG, 81541 München (DE)
(72) Erfinder: Eichinger, Josef Martin, 85464 Neufinsing (DE); Schulz, Egon, Dr., 80993 München (DE)

(57) **Zusammenfassung**

Die Erfindung betrifft ein Verfahren zur Übertragung von digitalen komplexwertigen Daten zwischen einer ersten Einheit und zumindest einer zweiten Einheit. Die Übertragung erfolgt zwischen der ersten und der zweiten Einheit über eine serielle digitale Schnittstelle. Erfindungsgemäß wird an den digitalen Daten vor der Übertragung über die Schnittstelle ein Verfahren zur Quellcodierung angewendet. Die digitalen Daten enthalten komplexwertige Daten. Als digitale Schnittstelle kann eine CPRI-Schnittstelle oder eine OBSAI-Schnittstelle verwendet werden.

## Beschreibung

Die Erfindung betrifft ein Verfahren zur Übertragung von digitalen, komplexwertigen Daten zwischen einer ersten Einheit und zumindest einer zweiten Einheit gemäß dem Oberbegriff des Patentanspruchs 1.

Es sind Basisstationen bekannt, bei denen digitale Daten zwischen einer ersten Einheit und einer zweiten Einheit mit Hilfe einer digitalen Schnittstelle übertragen werden.

Als digitale Schnittstelle sind beispielsweise die so genannte "CPRI"-Schnittstelle oder die so genannte "OBSAI"-Schnittstelle bekannt.

Beispielsweise kann mit Hilfe einer derartigen digitalen Schnittstelle eine erste Einheit mit zumindest einer zweiten Einheit, die beide innerhalb eines gemeinsamen Basisstationsgehäuses angeordnet sind, verbunden werden. Es ist aber auch möglich, eine zentrale Einheit einer Basisstation mit zumindest einer abgesetzten, zweiten Einheit der Basisstation mit Hilfe der digitalen Schnittstelle zu verbinden.

Bei so genannten "Remote Radio Head, RRH"-Anordnungen bzw. bei "Tower Mounted Radio"-Anordnungen beinhaltet die abgesetzte zweite Einheit üblicherweise eine Sendeeinrichtung, der über die digitale Schnittstelle komplexwertige IQ-Daten oder IQ-Datenpakete zugeführt werden. Die zweite Einheit wandelt dann diese für eine hochfrequente Abstrahlung um.

Mit zunehmender Funkbandbreite steigt eine Anzahl von Abtastwerten bzw. eine Anzahl von komplexwertigen IQ-Daten an, die über die digitale Schnittstelle zwischen betrachteten Einheiten übertragen werden müssen.

Bei derzeitigen Funkkommunikationssystemen werden Datenraten von 1,288 GBit/s verwendet, um eine Kanalbandbreite von 20 MHz abzudecken. Bei einer zunehmenden Kanalbandbreite oder bei einer kaskadenförmigen Anordnung von mehreren abgesetzten Einheiten steigen die Datenraten auf der digitalen Schnittstelle soweit an, dass derzeit bekannte Übertragungstechnologien an ihre Grenzen stoßen.

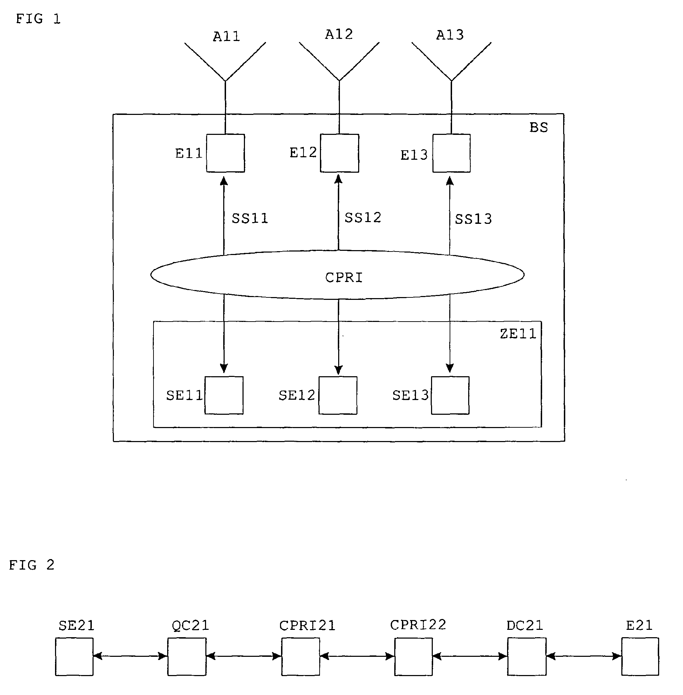

FIG 1 zeigt eine parallelisierte Übertragung zwischen abgesetzten Einheiten E11, E12 und E13 einer Basisstation BS mit einer zentralen Einheit ZE11 der Basisstation BS.

Die zentrale Einheit ZE11 beinhaltet beispielhaft drei als "channel cards" bezeichnete Sendeeinheiten SE11, SE12 und SE13. Jede der Sendeinheiten SE11 bis SE13 ist jeweils einer der abgesetzten Einheiten E11 bis E13 zugeordnet.

Eine erste Sendeeinheit SE11 bildet ein komplexwertiges Basisbandsignal, das als digitales Sendesignal SS11 mit IQ-Datenpaketen über eine digitale CPRI-Verbindung zur zugeordneten Einheit E11 gelangt.

Eine zweite Sendeeinheit SE12 bildet ein komplexwertiges Basisbandsignal, das als digitales Sendesignal SS12 mit IQ-Datenpaketen über eine digitale CPRI-Verbindung zur zugeordneten Einheit E12 gelangt.

Eine dritte Sendeeinheit SE13 bildet ein komplexwertiges Basisbandsignal, das als digitales Sendesignal SS13 mit IQ-Datenpaketen über eine digitale CPRI-Verbindung zur zugeordneten Einheit E13 gelangt.

Jede einzelne der abgesetzten Einheiten E11 bis E13 ist jeweils einer Antenne A11 bis A13 zugeordnet und mit dieser verbunden.

Nachteilig ist bei dieser Anordnung neben der dreifachen CPRI-Leitungsführung, dass eine Steigerung der Datenraten auf verwendeten CPRI-Schnittstellen nur mit großem Aufwand möglich ist.

Insbesondere wären teuere Tranceiver bzw. elektro-optische Wandler dafür notwendig.

Auch bei einer vorgenommenen Multiplex-Übertragung über nur eine CPRI-Verbindung müsste ein komplexer und teurer Tranceiver verwendet werden, während die CPRI-Verbindungsleitung eine dreifache Übertragungskapazität aufweisen müsste.

Es ist Aufgabe der vorliegenden Erfindung, ein Verfahren und eine Anordnung für eine kostengünstige Übertragung von digitalen, komplexwertigen Daten zwischen einer ersten Einheit und zumindest einer zweiten Einheit anzugeben, mit der eine erhöhte Datenübertragungsrate realisierbar ist.

Diese Aufgabe wird durch die Merkmale des Patentanspruchs 1 und des Patentanspruchs 10 gelöst. Vorteilhafte Weiterbildungen sind in den jeweiligen Unteransprüchen angegeben.

Eine Übertragung von digitalen, komplexwertigen Daten zwischen einer ersten Einheit und zumindest einer zweiten Einheit erfolgt über eine digitale Schnittstelle, die beispielsweise als CPRI-Schnittstelle oder als OBSAI-Schnittstelle ausgebildet sein kann.

Beispielsweise werden digitale Daten eines komplexwertigen Basisbandsignals für eine Übertragung über die digitale Schnittstelle quantisiert und in komplexwertige IQ-Datenpakete umgewandelt.

Zur Übertragung wird ein spezifisches Übertragungsprotokoll verwendet, das durch die verwendete digitale Schnittstelle bestimmt wird. Beispielsweise kann ein CPRI-Übertragungsprototkoll verwendet werden.

Erfindungsgemäß wird an den digitalen IQ-Daten vor der Übertragung über die digitale Schnittstelle ein Verfahren zur Quellcodierung angewendet.

Mit Hilfe der vorliegenden Erfindung ist es möglich, eine erhöhte Anzahl an Abtastwerten bzw. an digitalen komplexwertigen IQ-Daten über die digitale Schnittstelle zu übertragen.

Die digitale Schnittstelle ist dabei bevorzugt jedoch nicht ausschließlich als CPRI-Schnittstelle ausgebildet.

Als Verfahren zur Quellcodierung könnte beispielsweise eine differentielle Codierung, ein Mantissen-Verfahren, ein entsprechend angepasstes Verfahren aus der Bildcodierung oder ähnliches verwendet werden.

Nachfolgend wird die Erfindung anhand einer Zeichnung näher erläutert. Dabei zeigt:
- FIG 1: die eingangs beschriebene Übertragung zwischen zwei Einheiten gemäß dem Stand der Technik,
- FIG 2: das Prinzip der Erfindung anhand eines funktionellen Blockschaltbilds,
- FIG 3: ein prinzipielles Blockschaltbild einer erfindungsgemäßen parallelisierten Übertragung,
- FIG 4: eine erfindungsgemäße gemeinsame Quelldecodierung zweier abgesetzter Einheiten,
- FIG 5: ein prinzipielles Blockschaltbild einer erfindungsgemä-ßen Hausdachversorgung, und
- FIG 6: ein prinzipielles Blockschaltbild von vier in einer Kaskade angeordneten abgesetzten Einheiten gemäß der Erfindung.

In den nachfolgend beschriebenen Figuren wird eine Senderichtung beschrieben, wobei die Quellcodierung an einer ersten Einheit und die Quelldecodierung an zumindest einer weiteren abgesetzten bzw. zweiten Einheit erfolgt.

Sinngemäß gilt für einen hier nicht dargestellten Empfangsfall, dass die Quellcodierung seitens der zweiten Einheit und die Quelldecodierung seitens der ersten Einheit erfolgt.

FIG 2 zeigt das Prinzip der Erfindung anhand eines funktionellen Blockschaltbilds.

Seitens einer ersten Einheit SE21 werden digitale, komplexwertige IQ-Daten einer Einrichtung zur Quellcodierung QC21 zugeführt und dort quellcodiert.

Die quellcodierten digitalen IQ-Daten gelangen über eine als CPRI-Schnittstelle ausgebildete, digitale Schnittstelle CPRI21 an eine weitere digitale Schnittstelle CPRI22, die ebenfalls als CPRI-Schnittstelle ausgebildet ist.

Zur Übertragung der quellcodierten digitalen IQ-Daten über die CPRI-Schnittstellen CPRI21 bzw. CPRI22 wird ein CPRI-Protokoll verwendet.

Die über die CPRI-Schnittstellen übertragenen IQ-Daten werden nun einer Einrichtung zur Quelldecodierung DC21 zugeführt, dort decodiert und in digitale IQ-Daten umgewandelt.

Die digitalen IQ-Daten wiederum gelangen an eine zweite Einheit E21 zur weiteren Verarbeitung.

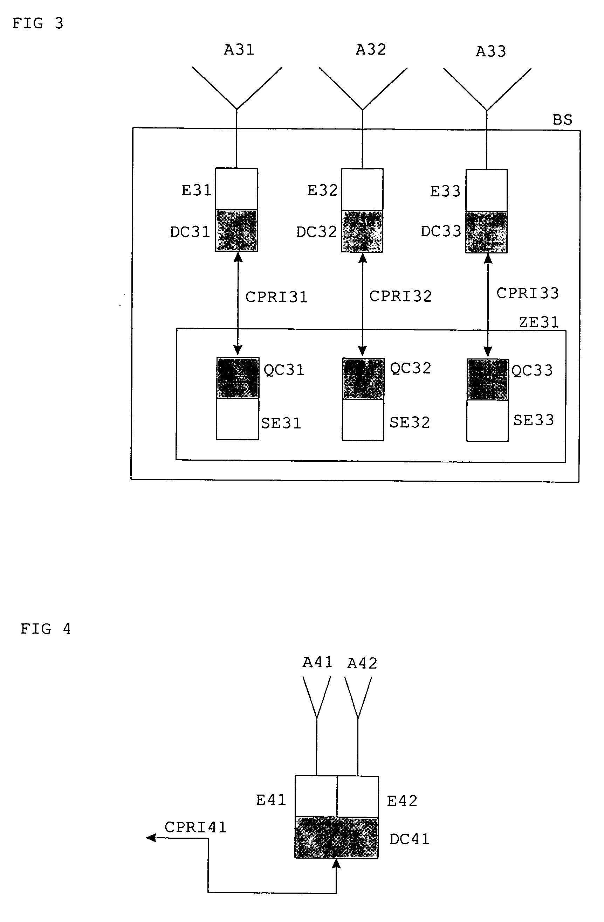

FIG 3 zeigt ein prinzipielles Blockschaltbild einer parallelisierten Übertragung gemäß der Erfindung.

Abgesetzte Einheiten E31, E32 und E33 einer Basisstation BS sind zum Senden bzw. Empfangen mit jeweils zugeordneten Antennen A31, A32 und A33 verbunden.

Eine zentrale Einheit ZE31 beinhaltet beispielhaft drei als "channel cards" bezeichnete Einheiten SE31, SE32 und SE33. Jede der Einheiten SE31 bis SE33 ist jeweils einer der abgesetzten Einheiten E31 bis E33 zugeordnet.

Eine erste Sendeeinheit SE31 bildet ein komplexwertiges Basisbandsignal mit digitalen IQ-Daten. Diese werden zur Quellcodierung einer Einrichtung zur Quellcodierung QC31 zugeführt.

Die Einrichtung zur Quellcodierung QC31 bildet daraus quellcodierte digitale IQ-Daten, die über eine digitale Verbindung CPRI31, die hier zwei CPRI-Schnittstellen beinhaltet, zu einer Einrichtung zur Quelldecodierung DC31 gelangen.

Die Einrichtung zur Quelldecodierung DC31 wiederum wandelt die übertragenen quellcodierten digitalen IQ-Daten in digitale IQ-Daten um, die dann zur abgesetzten Einheit E31 zur weiteren Verarbeitung für die zugeordnete Antenne A31 gelangen.

Eine zweite Sendeeinheit SE32 bildet ein komplexwertiges Basisbandsignal mit digitalen IQ-Daten. Diese werden zur Quellcodierung einer Einrichtung zur Quellcodierung QC32 zugeführt.

Die Einrichtung zur Quellcodierung QC32 bildet daraus quellcodierte digitale IQ-Daten, die über eine digitale Verbindung CPRI32, die hier zwei CPRI-Schnittstellen beinhaltet, zu einer Einrichtung zur Quelldecodierung DC32 gelangen.

Die Einrichtung zur Quelldecodierung DC32 wiederum wandelt die übertragenen quellcodierten digitalen IQ-Daten in digitale IQ-Daten um, die dann zur abgesetzten Einheit E32 zur weiteren Verarbeitung für die zugeordnete Antenne A32 gelangen.

Eine dritte Sendeeinheit SE33 bildet ein komplexwertiges Basisbandsignal mit digitalen IQ-Daten. Diese werden zur Quellcodierung einer Einrichtung zur Quellcodierung QC33 zugeführt.

Die Einrichtung zur Quellcodierung QC33 bildet daraus quellcodierte digitale IQ-Daten, die über eine digitale Verbindung CPRI33, die hier zwei CPRI-Schnittstellen beinhaltet, zu einer Einrichtung zur Quelldecodierung DC33 gelangen.

Die Einrichtung zur Quelldecodierung DC33 wiederum wandelt die übertragenen quellcodierten digitalen IQ-Daten in digitale IQ-Daten um, die dann zur abgesetzten Einheit E33 zur weiteren Verarbeitung für die zugeordnete Antenne A33 gelangen.

Die Übertragung der quellcodierten digitalen IQ-Daten über die Verbindungen CPRI31 bis CPRI33 erfolgt hier mit Hilfe eines CPRI-Protokolls.

FIG 4 zeigt eine erfindungsgemäße gemeinsame Quelldecodierung zweier abgesetzter Einheiten E41 und E42.

Einer ersten Antenne A41 ist eine abgesetzte Einheit E41 zugeordnet und vorgeschaltet, während einer zweiten Antenne A42 eine abgesetzte Einheit E42 zugeordnet und vorgeschaltet ist.

Den beiden abgesetzten Einheiten E41 und E42 ist eine gemeinsame Einrichtung zur Decodierung DC41 vorgeschaltet. Im Sendefall gelangen quellcodierte digitale IQ-Daten über eine digitale Verbindung bzw. Schnittstelle CPRI41 an die gemeinsame Einrichtung zur Decodierung DC41.

Nach dort erfolgter Quelldecodierung gelangen gebildete digitale IQ-Daten an die jeweils zugeordneten abgesetzten Einheiten E41 bzw. E42 zur weiteren Verarbeitung für die jeweiligen Antennen A41 bzw. A42.

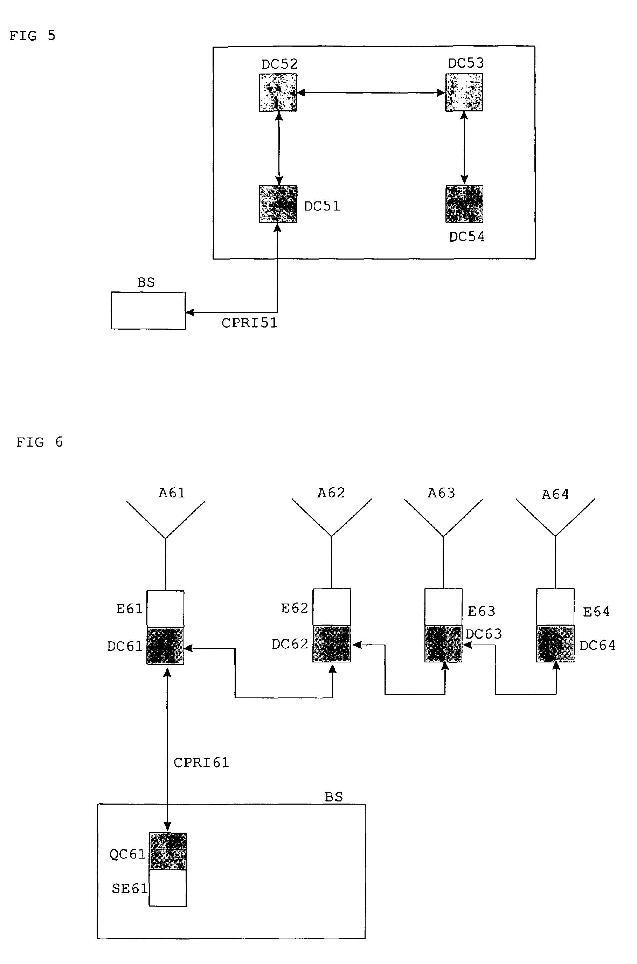

FIG 5 zeigt ein prinzipielles Blockschaltbild einer erfindungsgemäßen Hausdachversorgung.

Quellcodierte digitale IQ-Daten einer Basisstation BS gelangen über eine digitale Verbindung bzw. Schnittstelle CPRI51 an eine Serienschaltung von vier Einrichtungen zur Decodierung DC51, DC52, DC53 und DC54.

Jede dieser Einrichtungen zur Decodierung DC51 bis DC54 ist sinngemäß zu FIG 3 über eine jeweils zugeordnete Sendeeinrichtung mit jeweils einer zugeordneten Antenne verbunden - hier nicht dargestellt.

Die quellcodierten digitalen IQ-Daten der Basisstation BS gelangen zuerst an eine erste Einrichtung zur Decodierung DC51 und von dort an die weiteren seriell folgenden Einrichtungen zur Decodierung DC52 bis DC54.

An jeder einzelnen Einrichtung zur Decodierung DC51 bis DC54 erfolgt eine Quelldecodierung der zugeführten quellcodierten IQ-Daten.

Bei einer hier nicht dargestellten Variante sind die Decodiereinrichtungen DC52, DC53 und DC54 mit der Decodiereinrichtung DC51 sternförmig verbunden.

FIG 6 zeigt ein prinzipielles Blockschaltbild von vier in einer Kaskade angeordneten abgesetzten Einheiten E61 bis E64 gemäß der Erfindung.

Einer ersten Antenne A61 ist eine abgesetzte Einheit E61 und eine Einrichtung zur Decodierung DC61 vorgeschaltet.

Im Sendefall gelangen quellcodierte digitale IQ-Daten einer ersten Einheit SE61 einer Basisstation BS über eine Einrichtung zur Quellcodierung QC61 und über eine digitale Verbindung bzw. Schnittstelle CPRI61 an die Einrichtung zur Decodierung DC61.

An der Einrichtung zur Decodierung DC61 wird ein zugehöriger Signalanteil aus dem übertragenen CPRI-Datenstrom entnommen.

Dort erfolgt eine Quelldecodierung, so dass quelldecodierte IQ-Daten an die abgesetzte Einheit E61 zur weiteren Verarbeitung für die zugeordnete Antenne A61 gelangen.

Einer zweiten Antenne A62 ist eine abgesetzte Einheit E62 und eine Einrichtung zur Decodierung DC62 vorgeschaltet.

Im Sendefall gelangen quellcodierte digitale IQ-Daten von der Einrichtung zur Decodierung DC61 an die Einrichtung zur Decodierung DC62.

An der Einrichtung zur Decodierung DC62 wird ein zugehöriger Signalanteil aus dem übertragenen CPRI-Datenstrom entnommen.

Dort erfolgt eine Quelldecodierung, so dass quelldecodierte IQ-Daten an die abgesetzte Einheit E62 zur weiteren Verarbeitung für die zugeordnete Antenne A62 gelangen.

Einer dritten Antenne A63 ist eine abgesetzte Einheit E63 und eine Einrichtung zur Decodierung DC63 vorgeschaltet.

Im Sendefall gelangen quellcodierte digitale IQ-Daten von der Einrichtung zur Decodierung DC62 an die Einrichtung zur Decodierung DC63.

An der Einrichtung zur Decodierung DC63 wird ein zugehöriger Signalanteil aus dem übertragenen CPRI-Datenstrom entnommen.

Dort erfolgt eine Quelldecodierung, so dass quelldecodierte IQ-Daten an die abgesetzte Einheit E63 zur weiteren Verarbeitung für die zugeordnete Antenne A63 gelangen.

Einer vierten Antenne A64 ist eine abgesetzte Einheit E64 und eine Einrichtung zur Decodierung DC64 vorgeschaltet. Im Sendefall gelangen quellcodierte digitale IQ-Daten von der Einrichtung zur Decodierung DC63 an die Einrichtung zur Decodierung DC64.

An der Einrichtung zur Decodierung DC64 wird ein zugehöriger Signalanteil aus dem übertragenen CPRI-Datenstrom entnommen.

Dort erfolgt eine Quelldecodierung, so dass quelldecodierte IQ-Daten an die abgesetzte Einheit E64 zur weiteren Verarbeitung für die zugeordnete Antenne A64 gelangen.

Eine gemeinsame Quellcodierung der Daten aller Antennensignale wird in der Einrichtung zur Quellcodierung QC61 durchgeführt, wobei das quellcodierte Signal aus einer Summe von allen einzelnen Sendesignalen besteht.

Die Quellcodierung kann gemeinsam für alle Antennensignale erfolgen oder aber getrennt mit anschließendem multiplexen der einzelnen Antennensignale zu einem gemeinsamen CPRI-Datenstrom, der über die CPRI-Verbindung CPRI61 übertragen wird.

## Patentansprüche

1. Verfahren zur Übertragung von digitalen komplexwertigen Daten zwischen einer ersten Einheit und zumindest einer zweiten Einheit,
- bei dem die Übertragung zwischen der ersten und der zweiten Einheit über eine serielle digitale Schnittstelle erfolgt,
**dadurch gekennzeichnet,**
- **dass** an den digitalen komplexwertigen Daten vor der Übertragung über die Schnittstelle ein Verfahren zur Quellcodierung angewendet wird.

2. Verfahren nach Anspruch 1, **dadurch gekennzeichnet, dass** als digitale Schnittstelle eine CPRI-Schnittstelle oder eine OBSAI-Schnittstelle verwendet wird.

3. Verfahren nach Anspruch 1 oder 2, **dadurch gekennzeichnet, dass** IQ-Daten als digitale komplexwertige Daten übertragen werden.

4. Verfahren nach einem der vorhergehenden Ansprüche, **dadurch gekennzeichnet, dass** an den quellcodiert übertragenen, komplexwertigen Daten nach der Übertragung über die Schnittstelle ein Verfahren zur Quelldecodierung angewendet wird.

5. Verfahren nach Anspruch 4, **dadurch gekennzeichnet, dass** das Verfahren zur Quelldecodierung an jeder zweiten Einheit durchgeführt wird, so dass für jede zweite Einheit ihr zuordenbare quelldecodierte digitale komplexwertige Daten gebildet werden.

6. Verfahren nach Anspruch 4, **dadurch gekennzeichnet, dass** für eine Anzahl von zweiten Einheiten ein gemeinsames Verfahren zur Quelldecodierung durchgeführt wird, so dass für diese zweiten Einheiten jeweils zuordenbare quelldecodierte digitale komplexwertige Daten gebildet werden.

7. Verfahren nach Anspruch 5 oder 6, **dadurch gekennzeichnet, dass** digitale komplexwertige Daten, die für eine Anzahl von zweiten Einheiten bestimmt sind, seitens der ersten Einheit zusammengefasst und gemeinsam quellcodiert werden.

8. Verfahren nach Anspruch 5 oder 6, **dadurch gekennzeichnet, dass** digitale komplexwertige Daten, die für eine Anzahl von zweiten Einheiten bestimmt sind, jeweils einzeln quellcodiert werden und vor der Übertragung über die Schnittstelle zusammengefasst werden.

9. Verfahren nach einem der vorhergehenden Ansprüche, **dadurch gekennzeichnet, dass** als Verfahren zur Quellcodierung eine differentielle Codierung, ein Mantissen-Verfahren oder ein angepasstes Verfahren aus der Bildcodierung verwendet wird.

10. Anordnung zur Übertragung von digitalen komplexwertigen Daten,
- mit einer ersten Einheit, mit zumindest einer zweiten Einheit und mit einer seriellen digitalen Schnittstelle,
- bei der die erste Einheit über die Schnittstelle mit der zumindest einen zweiten Einheit zur Übertragung der Daten verbunden ist,
**dadurch gekennzeichnet,**
- **dass** zwischen der ersten Einheit und der Schnittstelle eine Einrichtung zur Quellcodierung angeordnet ist, so dass die digitalen komplexwertigen Daten vor der Übertragung über die Schnittstelle quellcodiert werden.

11. Anordnung nach Anspruch 10, **dadurch gekennzeichnet, dass** die digitale Schnittstelle als CPRI-Schnittstelle oder als OBSAI-Schnittstelle ausgebildet ist.

12. Anordnung nach Anspruch 10 oder 11, **dadurch gekennzeichnet, dass** die erste Einheit, die zweite Einheit, die Schnittstelle und die Einrichtung zur Quellcodierung zur Übertragung von digitalen, komplexwertigen IQ-Daten ausgebildet sind.

13. Anordnung nach einem der Ansprüche 10 bis 12, **dadurch gekennzeichnet, dass** zwischen der Schnittstelle und der zweiten Einheit eine Einrichtung zur Quelldecodierung angeordnet ist, so dass die quellcodiert übertragenen, komplexwertigen Daten nach der Übertragung über die Schnittstelle quelldecodiert werden.

14. Anordnung nach Anspruch 13, **dadurch gekennzeichnet, dass** jeder einzelnen zweiten Einheit jeweils eine Einrichtung zur Quelldecodierung vorgeschaltet ist.

15. Anordnung nach Anspruch 13, **dadurch gekennzeichnet, dass** einer Anzahl von zweiten Einheiten genau eine gemeinsam genutzte Einrichtung zur Quelldecodierung vorgeschaltet ist.

16. Anordnung nach Anspruch 14 oder 15, **dadurch gekennzeichnet, dass** seitens der ersten Einheit die Einrichtung zur Quellcodierung derart ausgestaltet ist, dass digitale komplexwertige Daten, die für eine Anzahl von zweiten Einheiten bestimmt sind, zusammenfasst und gemeinsam quellcodiert werden.

17. Anordnung nach Anspruch 14 oder 15, **dadurch gekennzeichnet, dass** seitens der ersten Einheit die Einrichtung zur Quellcodierung derart ausgestaltet ist, dass digitale komplexwertige Daten, die für eine Anzahl von zweiten Einheiten bestimmt sind, jeweils einzeln quellcodiert und vor der Übertragung über die Schnittstelle zusammengefasst werden.

18. Anordnung nach einem der Ansprüche 10 bis 17, **dadurch gekennzeichnet, dass** die Einrichtung zur Quellcodierung zur Durchführung einer differentiellen Codierung, eines Mantissen-Verfahren oder eines angepassten Verfahrens aus der Bildcodierung ausgebildet ist.
